Europäisches Patentamt

European Patent Office

Office européen des brevets

(11) Publication number: 0 219 250
A2

## EUROPEAN PATENT APPLICATION

(21) Application number: 86307367.2

(22) Date of filing: 25.09.86

(51) Int. Cl.⁴: G01M 3/04 , G01M 3/22

(30) Priority: 09.10.85 GB 8524933

(43) Date of publication of application:
22.04.87 Bulletin 87/17

(84) Designated Contracting States:
DE FR GB IT NL SE

(71) Applicant: GAYDON TECHNOLOGY LIMITED
106 Oxford Road
Uxbridge Middlesex UB8 1EH(GB)

(72) Inventor: Bray, David James
6 Orchard Road
Bromsgrove Worcestershire(GB)
Inventor: Johnston, Peter Ernest
160 Birmingham Road
Redditch Worcestershire(GB)
Inventor: Marshall, Peter Edward George
37 Saxon Close
Stratford-on-Avon Warwickshire(GB)
Inventor: Piper, Francis Raymond
5 Cedarwood Gardens
Evesham Worcestershire(GB)

(74) Representative: Waters, Jeffrey
ARG Patent Department Cowley Body Plant
Cowley Oxford OX4 5NL(GB)

(54) A leak detector.

(57) A leak detector (1) having a sample inlet (5) for receiving a sample of gas and which is connected to an analyser for sensing the presence of a signal gas in the sample, an impervious, resilient skirt (6) surrounding the sample inlet (5) so that when its open end is placed against a workpiece to be tested a sampling volume is to find within the skirt (6) between the detector (1) and the workpiece, and a compressed air source for producing an air curtain around the skirt (6) between the detector (1) and the workpiece.

# A LEAK DETECTOR

This invention relates to a leak detector and particularly but not exclusively to a leak detector for detecting leaks from a series of spaced welded joints.

This invention is a modification of known leak detectors such as those described in European Patent Specifications Nos. 0064880A and 0138370A, and in UK Patent Specifications Nos. 2133892A, 2133893A, 2146440A, 2146441A and 2146442A. These known leak detectors are designed to be scanned across a workpiece such as a motor vehicle body to detect leaks by sensing for the presence of a signal gas which has escaped through a leak.

According to the present invention there is provided a leak detector having a sample inlet for receiving a sample of gas and which in use is connected to means for sensing the presence of a signal gas in the sample; an impervious skirt surrounding the sample inlet so that when its free end is placed against a workpiece to be tested a sampling volume is defined within the skirt between the detector and the workpiece; and means for producing an air curtain around the skirt between the detector and the workpiece when the skirt is in contact with the workpiece wherein the skirt is constructed from a resilient material and is detachable to allow different skirts to be fitted for different applications.

This modified form of leak detector is not designed for scanning across a workpiece but for detecting leaks at specific sites over which the skirt is placed. It is particularly suitable for testing a series of similar sites such as the welded joints between the ends of pipes in an end plate of a heat exchanger where the joints may be positioned very close to each other and a highly sensitive test is required.

Preferred features of the invention are described in the subsidary claims of the specification.

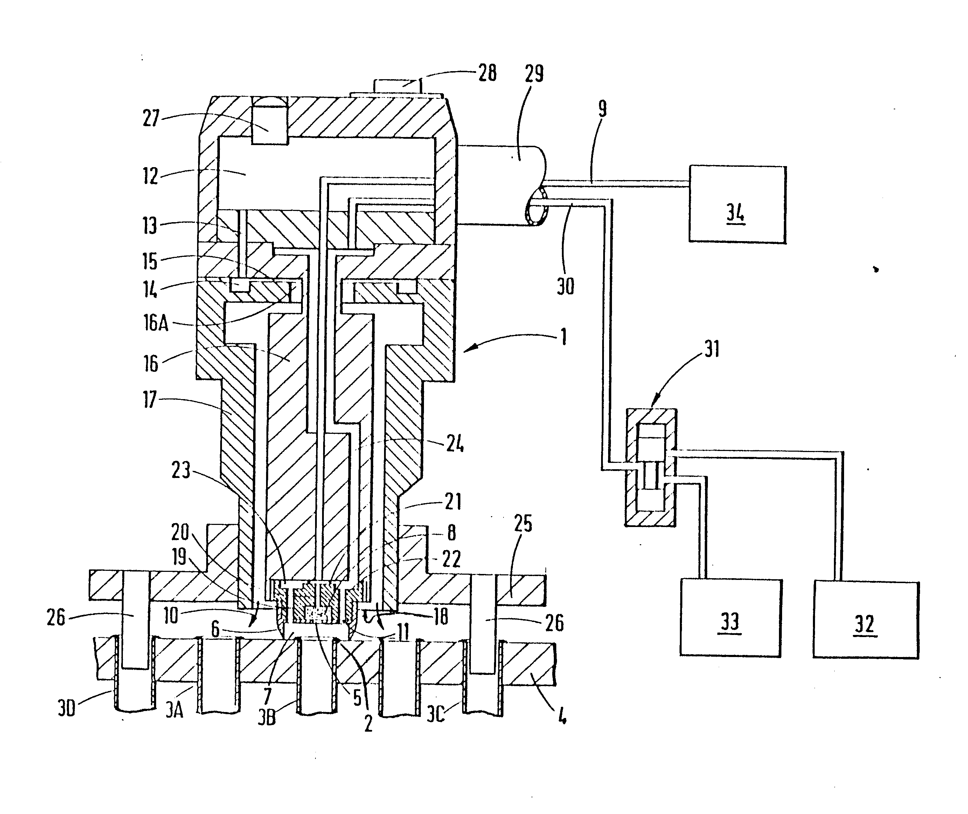

The invention will now be described by way of example with reference to the accompanying drawing which is a cross-sectional view of a preferred embodiment of a leak detector according to this invention. The leak detector 1 is shown in the drawing testing a weld 2 between the end of a tube 3B of a heat exchanger and an end plate 4 thereof. The tube 3B may, typically, be about 1.27-1.9cm - (0.5-0.75 inches) in diameter and the centres of adjacent tubes, 3A and 3B, may be about 2.54-3.18cm (1-1.25 inches) apart. The invention will be described with reference to this particular use although it could equally well be applied to other uses.

The leak detector 1 comprises a sample inlet 5 surrounded by an impervious skirt 6 formed from rubber or other resilient material. The skirt 6 is positioned over a site which is to be tested for leaks, in this case the weld 2, to define a sampling volume 7 within the skirt 6 between the sample inlet 5 and the tube plate 4. The diameter of the skirt 6 is sufficient to enable it to cover the end of the tube 3B but not so large that it overlaps any adjacent tube such as tube 3A. The skirt 6 thus accurately defines the specific area to be tested.

The interior of the heat exchanger is pressurized above ambient pressure with a signal gas such as a mixture of air and helium and the leak detector is used to detect whether any signal gas has escaped from the heat exhanger for instance through a faulty weld. When the leak detector is positioned with the free end of the skirt placed against an area of the heat exchanger to be tested, a sample of gas from the sampling volume 7 is received in the sample inlet 5, and is passed through a filter 8 and a tube 9 to an analyser 34 such as a mass spectrometer which senses the presence of any signal gas such as Helium in the sample. Other types of analyser may be used to sense for whatever characteristic feature indicates that signal gas is present in the sample.

The skirt 6 is positioned over each tube 3 in turn to test each weld individually. The leak detector 1 is not therefore scanned across the heat exchanger but is moved to cover a specific weld and then moved out away from that weld and across to the next. The movement of the leak detector may be effected by hand or by a mechanical manipulator such as a robot arm.

As described more fully in the prior art specifications referred to above, it is necessary to provide a curtain 10 of barrier gas around the sampling volume 7 in order to isolate it from the external atmosphere which might contain helium which has leaked from areas other than the area under test. The curtain 10 is produced by a supply of pressurized air which is connected to the leak detector 1 by a pipe 29. Pressurized air from pipe 29 passes into chamber 12 and through a plurality of drillings 13 into an annular chamber 14. From the annular chamber 14, the air passes through a narrow circumferential orifice 15 and impinges upon a cylindrical section 16A of a central body portion 16 of the detector 1 and then passes along an annular duct defined between the body portion 16 and a co-axial sleeve 17 to emerge from an annular orifice 18 at the end of the duct as an air curtain 10. The construction and function of the various chambers and passageways within the detector through which the pressurized air passes are described in more detail in UK Patent Specification No. 2133892A. They are designed so that the air curtain 10 comprises a substantially laminar flow of air and so that there is an equal mass flow rate of air around the entire circumference of the curtain 10.

The skirt is typically about 6mm long so as to allow the barrier gas to escape freely from annular orifice 18 to form the curtain 10 and to provide sufficient room in the sampling volume to accommodate the weld 2, particularly if the end of the tube 3B projects beyond the tube plate 4, but is kept as short as possible so as not to impair the response time of the leak detector.

The skirt 6 has a diameter less than that of the air curtain 10 and acts as a deflector to prevent most of the air which would otherwise enter the sampling volume 7 from the air curtain 10 from doing so but the skirt 6 does not affect the performance of the air curtain 10 itself. This increases the sensitivity of the leak detector since any signal gas leaking into the sampling volume 7 is not diluted by air from the air curtain 10. It is emphasised that the use of the skirt 6 does not render the air curtain 10 redundant since it is not possible to rely on the contact between the skirt 6 and the tube plate 4 to prevent helium from the external atmosphere from entering the sampling volume 7. However, the use of the skirt 6 greatly reduces the quantity of air from the air curtain 10 which enters the sampling volume 7 and this can increase the sensitivity of the leak detector by a factor of 50 -100 times.

As substantially no air from the air curtain 10 enters the sampling volume 7, there is no vortex action (such as described in UK Patent Specification No. 2146441A) to assist the flow of signal gas from a leak in the heat exchanger to the sample inlet 5. Thus, in order to improve the response time of the detector 1, it is therefore desirable to reduce the pressure in the sampling volume 7 to help draw air from any leak into the sampling volume 7 and into the sample inlet 5. In the illustrated embodiment, this is achieved by orifices 11 which connect the sampling volume 7 with a vacuum source 33. There may, for instance, be three or four orifices 11 equally spaced around a central sample inlet 5 and the vacuum applied to the sampling volume 7 may be in the range of 0.5-15.0 KN/m² (2"-30" water gauge).

It is desirable to provide purging means to purge the sampling volume 7 before it is tested since signal gas may be detected which has not emanated from a leak in the sampling volume 7. This is particularly important in an application such as that illustrated in the drawing in which the sampling volume 7 is in communication with the interior of a tube 3B the other end of which may be open to the atmosphere or exposed in some other way to a leak elsewhere in the heat exchanger. This purging can be achieved by passing clean air at a pressure of between 69-345 KN/m² (10 -50 lbs-in²) through' the sampling volume 7. In a convenient arrangement, this clean air can be passed through the orifices 11 into the sampling volume 7. The leak detector 1 would thus be connected by a pipe 30 to a changeover valve 31 for selectively connecting the orifices 11 with a source 32 of pressurized air when the sampling volume 7 is to be purged and to the vacuum source 33 when testing is to take place.

In a preferred arrangement, control means (not shown) are provided to automatically control the sequence of events in each test. In a convenient control sequence for the use illustrated in the drawing, the analyser 34 is continuously actuated to sense for the presence of helium in gas samples drawn from the sampling volume 7. If helium is sensed at the beginning of a test, this might indicate a leak is present in the sampling volume 7 or it could be helium which has entered the sampling volume 7 from a leak elsewhere, eg via the interior of the pipe 3B. Therefore, if the analyser 34 initially senses the presence of helium, the purging means is actuated to pass compressed air through the orifices 11 into the sampling volume 7. The skirt 6 prevents most of this air from escaping directly to the external atmosphere and so directs the air into the tube 3B. This purging is continued until the analyser no longer senses helium or until the level of helium sensed falls below a predetermined level. This may typically take around 1-10 seconds. The sampling volume 7 and the pipe 3B, or at least a certain length of it, then contain only clean air. The vacuum source 33 is then connected to the orifices 11 and the test continued for a time, typically about 3 seconds, which is related to the response time of the leak detector 1, sufficient for any helium which might enter the sampling volume 7 from a leak in the welded joint 2B to be sensed by the analyser. If no helium is sensed within this time, then the welded joint 2 is passed as satisfactory. The test after the purging has finished should not, of course, be continued too long otherwise helium may be detected which originates from within the tube 3B beyond the "plug" of clean air created therein by the purging operation. The sensitivity of the test can of course be adjusted to suit the particular application.

The leak detector may be provided with a switch 28 which can be used by the operator to initiate the test described above once the leak detector is positioned over a desired location. An electro-optical indicator 27 may also be provided to provide the operator information about each test.

As illustrated in the drawing, the skirt 6 may be a rubber moulding which is fitted onto a detachable nozzle 19. The skirt moulding 6 has an apperture which forms the sample inlet 5 and communicates with a recess in the nozzle 19 which contains the filter 8. A passage 20 leads from the filter 8 through the nozzle 19 to communicate with the tube 9 and hence the analyser. When the nozzle 19 is attached to the body portion 16 of the leak detector 1, for instance by means of a screw thread, an O-ring 21 provides a seal around the connection between the passage 20 and the tube 9. The skirt moulding 6 also comprises the orifices 11 which communicate with passages 22 passing through the nozzle 19. When the nozzle 19 is fitted to the body portion 16 of the leak detector 1, an annular chamber 23 is formed which provides communication between the passages 22 and further passages 23 ,24 in the body portion 16 leading to the compressed air source 32 and the vacuum source 33. As the nozzle 19 is detachable, it can be simply unscrewed and replaced by another carrying a skirt 6 of appropriate size for the particular application. This is particularly useful when the same leak detector 1 is to be used to test several heat exchangers which have tubes of different sizes and/or different spacing.

As the drawing shows, the skirt 6 also preferably has a cross-section which tapers to a rounded point at the end which to contact the tube plate 4. This tapered form, particularly when the inner surface of the skirt 6 is substantially parallel to the axis of the leak detector 1 and the outer surface is inclined thereto, ensures that the skirt 6 flexes uniformly around its circumference as it is pressed against the tube plate 4 so that a good contact between the skirt 6 and the tube plate 4 is maintained. In addition, it ensures that the skirt does not bow out excessively or collapse so as to interfere with the air curtain 10 or to overlap with an adjacent tube 3A.

As the skirt 6 is to be positioned over a large number of regularly spaced tubes one after the other, it is desirable to provide a locating rig to assist in accurately locating the skirt 6 over the tubes. A simple but effective way of doing this is to provide a locating plate 25, such as a plastics board, which is attached to the leak detector 1, and at least two locating pegs 26 which are push-fitted into holes in the plate 25. The pegs 26 are so spaced from each other and from the skirt 6 that when they are located in tubes such as tubes 3D and 3C, the skirt 6 is accurately located over the tube 3B. The locating plate 25 may also carry further sets of pegs (not shown) of different sizes and/or spaced at different intervals to suit other applications, the appropriate set of pegs being selected by removing or retracting the other pegs by simply pushing them through their respective holes in the locating plate 25.

As will be appreciated, the features described above enable the known leak detectors to be used in this new application where they are not required to scan across a surface but to provide a highly sensitive test for a series of adjacent sites.

## Claims

1. A leak detector having a sample inlet (5) for receiving a sample of gas and which in use is connected to means for sensing the presence of a signal gas in the sample; an impervious skirt (6) surrounding the sample inlet (5) so that when its free end is placed against a workpiece (4) to be tested a sampling volume is defined within the skirt (6) between the detector and the workpiece (4); and means for producing an air curtain around the skirt (6) between the detector and the workpiece - (4) when the skirt (6) is in contact with the workpiece (4) characterised in that the skirt (6) is constructed from a resilient material.

2. A leak detector as claimed in claim 1 characterised in that the skirt (6) is circular and is shaped so that it flexes uniformly around its circumference when pressed against the workpiece - (4) so that good contact between the workpiece (4) and the skirt is obtained.

3. A leak detector as claimed in claim 1 or in claim 2 characterised in that means (33) are provided to reduce the pressure within the sampling volume to assist the flow of gas from a leak in the workpiece (4) to the sample inlet(5).

4. A leak detector as claimed in claim 3 characterised in that means (32) are provided for purging the sampling volume of any signal gas which may not have emanated from a leak within the sampling volume.

5. A leak detector as claimed in claim 4 characterised in that the said means to reduce the pressure within the sampling volume includes at least one passage (22) spaced from the sample inlet and conduit means (24, 30) connecting the or each passage (22) with a source of vacuum.

6. A leak detector as claimed in claim 4 or in claim 5 characterised in that the said means (32) to purge the sampling volume includes at least one passage (22) spaced from the the sample inlet (5) and conduit means (24,30) connecting the or each passage (22) with a source of purge gas (32).

7. A leak detector as claimed in claim 6 when dependent upon claim 5 characterised in that conduit means (24,30) connecting the or each passage (22) with the source of vacuum (33) and the conduit means (24,30) connecting the or each passage with a source of purge gas (32) are the same conduit means (23,30) and valve means (31) are provided to selectively change from said source of vacuum (33) to said source of purge gas (32).

8. A leak detector as claimed in claim 7 characterised in that control means are provided to actuate the purging means if the presence of signal gas is sensed at the beginning of a test until the signal produced by the sensing means is reduced to a given level and then to cease purging and continue the test for a predetermined time sufficient to detect the presence of signal gas if a leak is present within the sampling volume.

9. A leak detector as claimed in any preceding claim for use in testing a series of regularly spaced sites (3A,3B,3C,3D) one after the other characterised in that locating means (25,26) are attached thereto for locating with at least two of the sites - (3C,3D) so that when the said means (25,26) are located with these sites (3C,3D) the skirt (6) is accurately positioned over a site (3B) which is to be tested.

10. A leak detector as claimed in any preceding claim characterised in that the skirt is detachable to allow different skirts to be fitted for different applications.